# EUROPEAN PATENT SPECIFICATION

(11) **EP 3 528 321 B1**
(45) Date of publication and mention of the grant of the patent: **13.10.2021**
(21) Application number: 19157415.1
(22) Date of filing: 15.02.2019
(51) Int. Cl.: H01M 4/131, H01M 4/136, H01M 4/36, H01M 4/525, H01M 4/58, H01M 4/62, H01M 10/42, H01M 10/052

(54) **NEGATIVE ELECTRODE ACTIVE MATERIAL, NEGATIVE ELECTRODE INCLUDING NEGATIVE ELECTRODE ACTIVE MATERIAL, AND SECONDARY BATTERY INCLUDING NEGATIVE ELECTRODE**
AKTIVMATERIAL FÜR NEGATIVE ELEKTRODEN, NEGATIVE ELEKTRODE, DIE DAS AKTIVMATERIAL FÜR NEGATIVE ELEKTRODEN ENTHÄLT, UND SEKUNDÄRBATTERIE, DIE DIE NEGATIVE ELEKTRODE ENTHÄLT
MATÉRIAU ACTIF D'ÉLECTRODE NÉGATIVE, ÉLECTRODE NÉGATIVE COMPRENANT LE MATÉRIAU ACTIF D'ÉLECTRODE NÉGATIVE, ET BATTERIE SECONDAIRE COMPRENANT L'ÉLECTRODE NÉGATIVE

(30) Priority: 19.02.2018 KR 20180019345
(43) Date of publication of application: 21.08.2019
(73) Proprietor: Samsung SDI Co., Ltd., Gyeonggi-do 17084 (KR)
(72) Inventor: Yoo, Heeeun, 17084 Yongin-si, Gyeonggi-do (KR); Nam, Junghyun, 17084 Yongin-si, Gyeonggi-do (KR); Seok, Hoon, 17084 Yongin-si, Gyeonggi-do (KR); Yoon, Yeonhee, 17084 Yongin-si, Gyeonggi-do (KR); Lee, Kyuseo, 17084 Yongin-si, Gyeonggi-do (KR); Jeon, Bokkyu, 17084 Yongin-si, Gyeonggi-do (KR); Ha, Jaehwan, 17084 Yongin-si, Gyeonggi-do (KR)
(74) Representative: Gulde & Partner

(56) References cited:
- WO-A1-2012/090804
- JP-A- 2014 192 143
- KR-A- 20160 041 496
- US-A1- 2011 020 703
- US-A1- 2017 033 344

## Description

### BACKGROUND OF THE INVENTION

### (a) Field of the Invention

This disclosure relates to a positive active material for a rechargeable lithium battery, a positive electrode including the same, and a rechargeable lithium battery including the same.

### (b) Description of the Related Art

A portable information device such as a cell phone, a laptop, smart phone, and the like or an electric vehicle has used a rechargeable lithium battery having high energy density and easy portability as a driving power source.

In general, a rechargeable lithium battery is manufactured by using materials capable of reversibly intercalating and deintercalating lithium ions as a positive active material and a negative active material and filling an electrolyte between the positive electrode and the negative electrode including the positive active material and the negative active material respectively.

Recently, as the fields of applying the rechargeable lithium battery are increasing, research on improving performances of a positive active material and a positive electrode including the positive active material among the constituent elements has been performed to develop a rechargeable lithium battery having improved battery characteristics even under a high temperature and a high voltage atmosphere. This is the case of patent literature JP 2014 192143 A and WO 2012/090804 A1 for example.

### SUMMARY OF THE INVENTION

Embodiments provide a positive electrode including a positive active material for a rechargeable lithium battery capable of realizing a rechargeable lithium battery having improved thermal stability and improved cycle-life characteristics, and a rechargeable lithium battery including the same.

A positive electrode for a rechargeable lithium battery according to an embodiment includes a current collector and a positive active material layer disposed on at least one surface of the current collector, wherein the positive active material layer includes the positive active material for a rechargeable lithium battery, wherein the positive active material for a rechargeable lithium battery includes a first positive active material and a second positive active material, wherein the first positive active material includes at least one nickel-based lithium composite oxide and the second positive active material is represented by Chemical Formula 2 and has an average particle diameter of 300 nm to 600 nm. The particle size analysis is performed according to international standard using Small-Angle X-ray Scattering (SAXS).

[Chemical Formula 2] Liₐ₁Fe₁₋ₓ₁M1ₓ₁PO₄

In Chemical Formula 2, 0.90 ≤ a1 ≤ 1.8, 0 ≤ x1 ≤ 0.7, and M1 is Mg, Co, Ni, or a combination thereof and a functional layer disposed on the positive active material layer, wherein the functional layer further comprises the compound represented by Chemical Formula 3, a binder and does not include an electrically conductive material.

[Chemical Formula 3] Liₐ₃Fe₁₋ₓ₃M3ₓ₃PO₄

In Chemical Formula 3, 0.90 ≤ a3 ≤ 1.8, 0 ≤ x3 ≤ 0.7, and M3 is Mg, Co, Ni, or a combination thereof.

A rechargeable lithium battery according to an embodiment includes the positive electrode for a rechargeable lithium battery according to an embodiment, a negative electrode, and an electrolyte solution.

An embodiment may provide a positive active material for a rechargeable lithium battery with excellent capacity by significantly reducing the sheet resistance and also with excellent thermal stability by mixing the positive active material having excellent heat resistance.

Thus, by applying the positive electrode including a positive active material according to an embodiment for a rechargeable lithium battery, it may realize a rechargeable lithium battery having excellent capacity and also having improved cycle-life characteristics and excellent thermal stability.

### BRIEF DESCRIPTION OF THE DRAWINGS

FIGS. 1A to 1C are views schematically showing shapes of plate particles.
FIG. 2 illustrates a definition of a radial shape in a secondary particle of a second nickel-based lithium composite oxide.
FIG. 3 schematically illustrates a structure of a second nickel-based lithium composite oxide.
FIG. 4 is a schematic view of a rechargeable lithium battery according to an embodiment.

### DETAILED DESCRIPTION OF THE INVENTION

Hereinafter, the present disclosure will be described more fully hereinafter with reference to the accompanying drawings, in which exemplary embodiments of the invention are shown. The described embodiments may be modified in various different ways.

The drawings and description are to be regarded as illustrative in nature and not restrictive. Like reference numerals designate like elements throughout the specification.

Sizes and thicknesses of components in the drawings are arbitrarily expressed for convenience of description and, thus, the present invention is not limited by the drawings.

In addition, unless explicitly described to the contrary, the word "comprise" and variations such as "comprises" or "comprising", will be understood to imply the inclusion of stated elements but not the exclusion of any other elements.

The positive active material of the positive electrode for a rechargeable lithium battery according to embodiments of this disclosure includes a first positive active material and a second positive active material.

Herein, the first positive active material includes at least one nickel-based lithium composite oxide. Specifically, the first positive active material may include at least one of a first nickel-based lithium composite oxide and a second nickel-based lithium composite oxide. In particular, the first positive active material may include at least two nickel-based lithium composite oxides having a different average particle diameter.

First, an embodiment of the present disclosure includes the first positive active material including the first nickel-based lithium composite oxide and the second positive active material.

In the present embodiment, the first positive active material may include a first nickel-based lithium composite oxide.

The first nickel-based lithium composite oxide may include any compound (lithiated intercalation compound) being capable of intercalating and deintercalating lithium without limitation. Specifically, one or more composite oxides of a metal selected from cobalt, manganese, nickel, and a combination thereof, and lithium may be used. More specific examples may include compounds represented by one of the following chemical formulae. LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤1.8, 0 ≤ b ≤ 0.5, 0 ≤ c ≤ 0.5, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α< 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α< 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ ( 0.90 ≤ a ≤ 1.8, 0 ≤ b ≤ 0.5, 0 ≤ c ≤ 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); LiNiVO₄; Li_{(3-f)}J₂(PO₄)₃ (0 ≤ f ≤ 2).

In the chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Z is selected from Cr, V, Fe, Sc, Y, and a combination thereof; and J is selected from V, Cr, Mn, Co, Ni, Cu, and a combination thereof.

The first nickel-based lithium composite oxide may have a coating layer on the surface, or may be mixed with another nickel-based lithium composite oxide having a coating layer.

The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method (e.g., spray coating, dipping, etc.), but is not illustrated in more detail since it is well-known to those who work in the related field.

On the other hand, the first nickel-based lithium composite oxide may include a compound represented by Chemical Formula 1.

[Chemical Formula 1] Liₐ₂(Ni_{1-x2-y-z}Coₓ₂Me_{y}M2_{z})O₂

In Chemical Formula 1, M2 is an element selected from boron (B), magnesium (Mg), calcium (Ca), strontium (Sr), barium (Ba), titanium (Ti), vanadium (V), chromium (Cr), iron (Fe), copper (Cu), and zirconium (Zr), 0.95 ≤ a2 ≤1.3, x< (1-x2-y-z), y < (1-x2-y-z), 0 < x2 < 1, 0 ≤ y < 1, 0 ≤ z < 1, and Me is at least one of Mn and Al. As described in above, in the compounds of Chemical Formula 1, the nickel content is higher than the cobalt content, and the nickel content is higher than the manganese content.

In Chemical Formula 1, a2 may be in the range of 0.95 ≤ a2 ≤ 1.3, and more specifically, 1.0 ≤ a2 ≤ 1.1. In addition, x2 may be in the range of 0 < x2 ≤ 0.33, and more specifically, 0.1 ≤ x2 ≤ 0.33. In addition, y may be in the range of 0 ≤ y ≤ 0.5, and more specifically, 0.05 ≤ y ≤ 0.3, and z may be in the range of 0 ≤ z ≤ 0.05. In Chemical Formula 1, x2, y, and z may be for example in the range of 0.33 ≤ (1-x2-y-z) ≤ 0.95. In addition, z, x2, and y may be for example in the range of 0 ≤ z ≤ 0.05, 0 < x2 ≤ 0.33, and 0 ≤ y ≤ 0.33.

According to modified embodiments of the present embodiment, z may be zero (0) in Chemical Formula 1.

In the nickel-based lithium composite oxide including the compound represented by Chemical Formula 1, the nickel content may range from 0.33 mol% to 0.95 mol% based on the total amount of the transition metals (Ni, Co, Mn), which may be higher than the manganese content and the cobalt content. In the nickel-based lithium composite oxide, the nickel content is higher than each of other transition metals based on the total 1 mole of the transition metal. By using the positive active material including the nickel-based lithium composite oxide having a large amount of nickel, the rechargeable lithium battery employing the positive electrode including the same may provide a high lithium diffusion degree, an excellent conductivity, and a higher capacity at the same voltage.

More specifically, the first nickel-based lithium composite oxide may include a compound represented by at least one of LiNi_{0.6}Co_{0.2}Mn_{0.2}O₂, LiNi_{0.5}Co_{0.2}Mn_{0.3}O₂, LiNi_{0.33}Co_{0.33}Mn_{0.33}O₂, LiNi_{0.8}Co_{0.1}Mn_{0.1}O₂, LiNi_{0.85}Co_{0.1}Al_{0.05}O₂, and LiNi_{0.95}Co_{0.025}Al_{0.025}O₂.

Meanwhile, the amount of the first positive active material according to the present embodiment may be 70 wt% to 99 wt%, more specifically, 85 wt% to 99 wt%, 87 wt% to 95 wt%, or 90 wt% to 98 wt% based on the total positive active material according to an embodiment. When the amount of the first positive active material satisfies the range, the safety may be improved while not deteriorating the capacity.

The first positive active material may have an average particle diameter of 1 µm to 25 µm. Specifically, an average particle diameter of the first positive active material may be 1 µm to 20 µm, or 2 µm to 16 µm.More specifically, it may be 8 µm to 15 µm, or 1 µm to 5 µm. When the average particle diameter of the first positive active material satisfies the range, by applying the positive active material mixed with the second positive active material on the positive electrode, the active mass density may be remarkably increased, and thus the rechargeable lithium battery may have a high capacity.

Next, the second positive active material is described.

The second positive active material is represented by Chemical Formula 2.

[Chemical Formula 2] Liₐ₁Fe₁₋ₓ₁M1ₓ₁PO₄

In Chemical Formula 2, 0.90 ≤ a1 ≤ 1.8, 0 ≤ x1 ≤ 0.7, and M1 is Mg, Co, Ni, or a combination thereof.

The second positive active material has an average particle diameter of, for example, 300 nm to 600 nm. When the average particle diameter of the second positive active material satisfies the range, by applying the positive active material mixed with the first positive active material on the positive electrode, the active mass density may be remarkably increased, and thus the rechargeable lithium battery may have a high capacity. In the present specification, the average particle diameter of the second positive active material means an average diameter of the second positive active material when the second positive active material is circular, or means an average of the long diameter, which is the average long diameter when the second positive active material is oval or amorphous. Particle size analysis is performed according to international standard using Small-Angle X-ray Scattering (SAXS).

An amount of the second positive active material may be 1 wt% to 15 wt%, more specifically, 2 wt% to 15 wt%, 2 wt% to 12 wt%, or 2 wt% to 10 wt% based on a total amount of the positive active material for a rechargeable lithium battery. When the amount of the second positive active material satisfies the range, the safety may be improved without reducing the capacity.

Next, as another embodiment of the present disclosure, a case including a first positive active material including a second nickel-based lithium composite oxide and a second positive active material is exemplified.

The present embodiment is substantially same as the positive active material according to an embodiment of the present invention, except that the first positive active material includes the second nickel-based lithium composite oxide including a secondary particle having at least partially radial-shaped alignment structure. Therefore, the detailed descriptions for the substantially identical constituent elements may be omitted, but hereinafter, it will be mainly described in the first positive active material including the second nickel-based lithium composite oxide including the secondary particle having at least partial radial-shaped alignment structure.

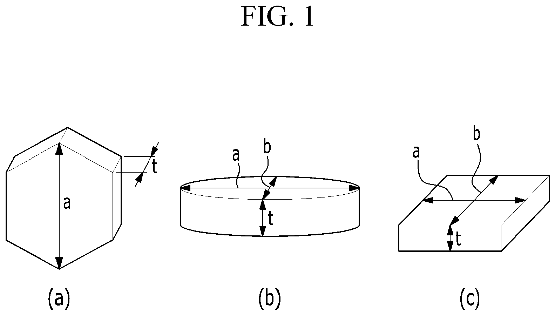

Specifically, the first positive active material including the second nickel-based lithium composite oxide will be described in detail with references to FIGS. 1 to 3.

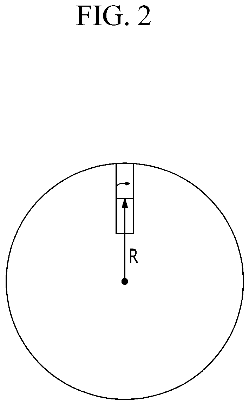

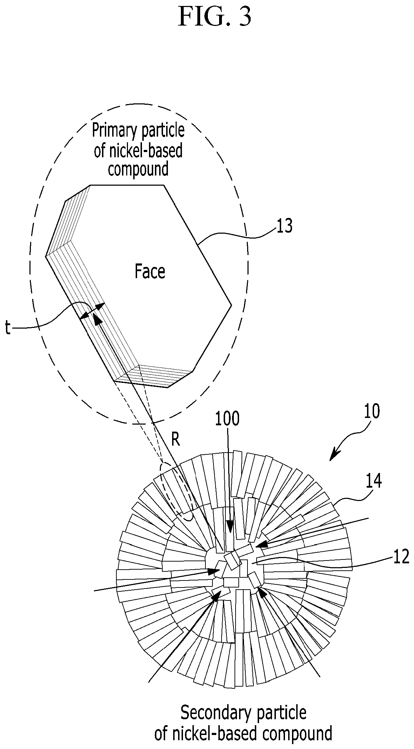

FIGS. 1A to 1C schematically show shapes of the plate particle, and FIG. 2 illustrates a definition of a radial shape in the secondary particle of the nickel-based lithium composite oxide. FIG. 3 schematically shows a structure of the second nickel-based lithium composite oxide.

According to the present embodiment, the first positive active material may include a second nickel-based lithium composite oxide including the secondary particle having at least one part of radial-shaped alignment structure.

The second nickel-based lithium composite oxide may include a secondary particle in which a plurality of primary particles is agglomerated. The secondary particle may include an external part having a radial-shaped alignment structure and an internal part having an irregular porous structure. In this case, the internal part of the secondary particle may have a pore size larger than the external part.

In the present disclosure, the particle size of the primary particle for the secondary particle maintains a small size enough to improve characteristics of the nickel-based lithium composite oxide. For example, it may range from 0.01 µm to 1 µm, specifically, from 0.05 µm to 1 µm.More specifically, it may range from 0.05 µm to 0.5 µm.

The internal pore size may be, for example, 150 nm to 1 µm, more specifically, 150 nm to 550 nm or 200 nm to 500 nm. In addition, the external pore size may be, for example, less than 150 nm, more specifically, less than or equal to 100 nm or 20 nm to 90 nm. As the internal pore size is larger than the external pore size, it has merits of shortening a distance of diffusing lithium in the secondary particle having the same size as in above, and it is favorable since the volume change during the charge and discharge is alleviated while not exposing pores to the electrolyte.

In the present specification, "pore size" refer to an average diameter of pore when the pore is spherical or circular, or refer to a long axis length when the pore is oval. Furthermore, the term "external" refers to a region where is far in 30 length% to 50 length%, for example, 40 length% from the outmost surface in the total distance from the center of the nickel-based composite oxide to the surface, or refers to a region within 2 µm from the outmost surface of the nickel-based lithium composite oxide. The term "internal" refers to a region where is far in 50 length% to 70 length%, for example, 60 length% from the center in the total distance from the center of the nickel-based lithium composite oxide to the surface, or refers to a region except the region within 2 µm from the outermost surface in the nickel-based lithium composite oxide.

The secondary particle may have open pore having a size of less than 150 nm, more specifically, 25 nm to 148 nm in the central part of the internal part. The open pore is exposed pore where the electrolyte solution may be flowed in and out. According to an embodiment, the open pore may be formed in a depth of 150 nm, more specifically, 0.001 nm to 100 nm or 1 nm to 50 nm, on average, from the surface of the nickel-based lithium composite oxide secondary particle.

Meanwhile, the nickel-based lithium composite oxide includes plate particles, and a long axis of the plate particle is arranged in a radial direction. In this case, the plane (plane vertical to (001) plane) where lithium is flowed in and out is exposed to the surface of the secondary particle.

In the present specification, "plate particle" means that the thickness of the plate particle is smaller than the long axis length (plane direction) thereof. The long axis length means the longest length based on the widest surface of the plate particle.

More specifically, when t refers to a length in one axis direction of the plate particle, which is a length in a thickness direction, and a refers to a length in the other axis direction, which is a length in a long axis in a plane direction, the plate particle means a structure body in which the length of t is less than the length of a.

Referring to FIGS. 1A to 1C, the plate particle may have a polygonal nano sheet shape such as hexagonal shown in FIG. 1A, a nano disk shape shown in FIG. 1B, or a direct hexahedral shape shown in FIG. 1C. In FIGS. 1A to 1C, the thickness t of the plate particle is smaller than the lengths a, b of the plane direction. In the length of the plane direction, a may be longer than b, or may be same as each other. In the plate particle, the direction that the thickness t is defined refers to a thickness direction, and the direction containing lengths a and b is defined as a plane direction.

Referring to FIG. 2, the term "radial" in the present specification means that the thickness (t) direction ((001) direction) of the plate is arranged to form a perpendicularity to a direction (R) toward the center in the secondary particle or an angle of perpendicularity ± 5° to the direction toward the center.

The second nickel-based lithium composite oxide has irregular porous pores in the internal part thereof. In the present specification, the irregular porous structure means a structure having pores in which the pore size and shape are neither regular nor uniform.

The internal part having the irregular porous structure includes plate particles as in the external part. The plate particles are irregularly arranged unlike the external part.

Next, an average length of the plate particles for the internal part and the external part of the secondary particle ranges from 150 nm to 500 nm, for example, from 200 nm to 380 nm, specifically, from 290 nm to 360 nm. The average length means an average length of the average long axis length and the average short axis length in a plane direction of the plate particle.

The average thickness of the plate particle for the internal part and the external part of the secondary particle ranges from 100 nm to 200 nm, for example, from 120 nm to 180 nm, specifically, from 130 nm to 150 nm. A ratio of the average thickness and the average length ranges from 1:2 to 1:5, for example, from 1:2 to 1:3. When the average length, the average thickness, and the ratio of the average thickness and the average length satisfy the ranges, and when the primary particles are radially arranged in the external part while having a small sized plate particle, the rechargeable lithium battery according to the present disclosure may provide high initial efficiency and capacity. This is because the crystalline surfaces where lithium may be delivered to the external part and the path of diffusing lithium among grain boundaries are relatively many exposed onto the surface of the second nickel-based lithium composite oxide having the structure, so as to improve the lithium diffusing degree.

In addition, when the plate primary particles are radially arranged, pores exposed from the surface therebetween are also facing toward the center direction, so as to accelerate the lithium diffusion from the surface. It may be uniformly contracted and expanded when intercalating and deintercalating lithium by the radially arranged primary particles, and pores are present in a 001 direction, which is a direction that particles are expanded when deintercalating lithium, so as to perform the buffer action. In addition, as the plate primary particle has a small size, a possibility to occur cracks on the contraction and expansion is reduced, and as the inner pores further alleviate the volume change, the cracks occurred among primary particles on the charge and discharge are reduced, so the rechargeable lithium battery applied with the positive electrode including the positive active material according to this disclosure improves the cycle-life characteristics and reduces the resistance increase.

In the second nickel-based lithium composite oxide, the inner pore size ranges from 150 nm to 550 nm, and the outer pore size is less than 150 nm.

Closed pores may be present in the internal part of the second nickel-based lithium composite oxide, and closed pores and/or open pores may be present in the external part. An electrolyte or the like may be hardly included in the closed pores, on the other hand, the electrolyte or the like may be included in the open pores. In the present specification, the closed pore may be called an independent pore that all walls of pore are closed so not to be connected to other pores; and the open pore may be called a continuous pore that at least a part of walls of pore is open so to be connected with the external part of particles. The secondary particle has open pores having a size of less than 150 nm toward the center part of the internal part.

Meanwhile, the total porosity of the first positive active material including the second nickel-based lithium composite oxide according to the present embodiment ranges from 1 % to 8 %, for example, from 1.5 % to 7.5 %. In the second nickel-based lithium composite oxide, the porosity of the external part is less than the porosity of the internal part. Pores exposed to the surface are facing toward the internal part center direction, and the pore has a size of less than 150 nm, for example, 10 to 100 nm when looking from the surface. The porosity of the internal part ranges from 2 % to 20 %, and the closed porosity of the external part ranges from 0.1 % to 2 %. The terms "closed porosity" mean that a percentage of the closed pores (pores where electrolyte solution may be not permeated) with respect to the total volume of the pores. In the present specification, the porosity means what is identical to the pore percentage, which refers to a ratio of an area of pores with respect to the entire area. The second nickel-based lithium composite oxide has an internal porosity (pore percentage) of 3.3 % to 16.5 % and an external porosity (pore percentage) of 0.3 % to 0.7 %.

Hereinafter, it will specifically describe a structure of the first positive active material including the second nickel-based lithium composite oxide according to the present embodiment referring to FIG. 3.

As shown in FIG. 3, the first positive active material according to the present embodiment includes a primary particle 13 and a secondary particle 10, and contains an external part 14 having a structure that the primary particles 13 are radially arranged and an internal part 12 that the plate particles are irregularly arranged. Empty space between plate particles is more present in the internal part 12 than in the external part. The pore size and the porosity in the internal part are larger and more irregular than the pore size and the porosity in the external part. In FIG. 3, an arrow 100 refers to a direction of transferring Li⁺ ions. In this case, the primary particle 13 may have a plate shape. FIG. 3 shows only one example of the first positive active material according to the present embodiment, but the structure of the positive active material according to the present invention is not limited thereto. The first positive active material according to the present embodiment helps to diffuse lithium by including radial plate particle and suppress the stress according to the volume change during the lithium charge and discharge to suppress occurring cracks. And it may reduce the sheet resistance layer and more exposes the direction of diffusing lithium onto the surface to enlarge the active surface area required for the lithium diffusion.

The first positive active material according to the present embodiment may be a form that plate particles having a long and radial shape in a long axis are present in the external part, and short and flat plate particles having a length of about 150 nm to about 200 nm, specifically nanodisk-shaped particles are present in the internal part.

In addition, the first positive active material according to the present embodiment may include radial-shaped plate particles and non-radial-shaped plate particles as a primary particle. An amount of the non-radial plate particles is less than or equal to about 20 wt%, more specifically, about 0.01 to about 10 wt%, or about 0.1 to about 5 wt% based on 100 parts by weight of the total weight of the radial plate particles and non-radial plate particles. When the non-radial plate particles besides the radial plate particles are included within the range in the second nickel-based lithium composite oxide, lithium is easily diffused to provide a rechargeable lithium battery with improved cycle-life characteristics.

The second nickel-based lithium composite oxide may be represented by Chemical Formula 1 like the first nickel-based lithium composite oxide, and more specifically, the second nickel-based composite oxide may be for example represented by at least one of LiNi_{0.6}Co_{0.2}Mn_{0.2}O₂, LiNi_{0.5}Co_{0.2}Mn_{0.3}O₂, LiNi_{0.33}Co_{0.33}Mn_{0.33}O₂, LiNi_{0.8}Co_{0.1}Mn_{0.1}O₂, LiNi_{0.85}Co_{0.1}Al_{0.05}O₂, and LiNi_{0.95}Co_{0.025}Al_{0.025}O_{2̅}.

Hereinafter, according to another example embodiment according to the present invention, it includes a first positive active material including at least two kinds of positive active materials having different average diameters and a second active material.

The positive active material according to the present embodiment is substantially same as the positive active material according to the example embodiment of the present invention, except that the first positive active material includes at least two kinds of positive active materials having different average particle diameters. So, the detailed descriptions for the substantially same constituent elements are omitted, hereinafter, it will describe the same based on the first positive active material including at least two kinds of positive active materials having different average particle diameters.

The first positive active material according to the present embodiment may include a positive active material having at least two kinds of positive active materials having different average particle diameters, that is, it may include at least one large-sized positive active material and at least one small-sized positive active material. The large-sized positive active material may have an average particle diameter of 7 µm to 15 µm, more specifically, 10 µm to 13 µm.The small-sized positive active material may have an average particle diameter of 1 µm to 5 µm, more specifically, 2 µm to 4 µm.When the first positive active material includes the large-sized and the small-sized positive active material having the average particle diameters as in above, it may further improve the capacity of the rechargeable lithium battery including the same.

Meanwhile, the first positive active material may include a mixture in which the large-sized and the small-sized positive active materials are mixed at a weight ratio of 9:1 to 6:4, for example, 9:1 to 7:3. When the weight ratio of the large sized and the small sized positive active materials in the mixture is within the range, the rechargeable lithium battery may have excellent cycle-life characteristics and excellent capacity. In the present specification, the average particle diameter of the active material means an average diameter of the active material when the active material is circular, or means an average of long diameters which is an average long diameter when the active material is oval or amorphous.

In the present embodiment, each of the large-sized positive active material and the small-sized positive active material may be at least one of the first nickel-based lithium composite oxide and the second nickel-based lithium composite oxide described in the above-mentioned embodiments.

Next, the positive electrode for a rechargeable lithium battery according to an embodiment of the present disclosure includes a current collector and a positive active material layer disposed on at least one surface of the current collector. In this case, the positive active material layer may include a positive active material for a rechargeable lithium battery according to above embodiments.

The positive electrode may be obtained by, for example, coating a slurry of the positive active material composition on a current collector, and drying and pressing the same to provide a positive active material layer.

An average thickness of the positive active material layer may be 50 µm to 70 µm, and more specifically, 50 µm to 60 µm or 60 µm to 70 µm. When the thickness of the positive active material layer is within the range, an energy density may be increased according to the thickening, and also it may have a merit of applying the same to the various kinds of batteries according to the aspects of devices to be employed.

On the other hand, the positive active material may be included in an amount of 90 wt% to 98 wt% based on the total weight of the positive active material layer.

In an embodiment, the positive active material layer may include a binder and a conductive material. Herein, the binder and the conductive material may be included in an amount of 1 wt% to 5 wt%, respectively based on the total amount of the positive active material layer.

The binder improves binding properties of positive active material particles with one another and with a current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector, that is, the positive electrode current collector may be an aluminum foil, a nickel foil, or a combination thereof, but is not limited thereto.

A positive electrode for a rechargeable lithium battery according to the invention includes a current collector, a positive active material layer disposed on at least one surface of the current collector, and a functional layer disposed on the positive active material layer. The descriptions for the current collector and the positive active material layer are same as in above, which will be omitted.

The functional layer includes the compound represented by the following Chemical Formula 3 and a binder. As the functional layer includes the compound represented by Chemical Formula 3 in the present embodiment, it may reduce exothermic value which is generated by the compound in the positive active material layer, so as to further improve a stability of the rechargeable lithium battery employing the same.

[Chemical Formula 3] Liₐ₃Fe₁₋ₓ₃M3ₓ₃PO₄

In Chemical Formula 3, 0.90 ≤ a3 ≤ 1.8, 0 ≤ x3 ≤ 0.7 and M3 is Mg, Co, Ni, or a combination thereof.

The positive active material layer is disposed between the current collector and the functional layer. When the functional layer is preliminarily formed on the current collector, and then the positive active material is disposed on the functional layer, it unfavorably deteriorates resistance and output characteristics since the compound represented by Chemical Formula 3 has low electronic conductivity. In this case, the positive active material layer may have a dense structure, and the functional layer may have a porous structure.

In this case, the compound represented by Chemical Formula 3 may have an average particle diameter of less than or equal to 2 µm, more specifically, of 0.2 µm to 1 µm. When the average particle diameter of the compound represented by Chemical Formula 3 satisfies the range, it may prevent the electronic conductivity deterioration and may improve a utilizing rate of the compound represented by Chemical Formula 3, and may prevent that the battery resistance is increased. Thus it may improve the cycle-life characteristics of the rechargeable lithium battery employing the positive electrode according to the present embodiment.

In the present specification, the average particle diameter of the compound represented by Chemical Formula 3 refers to an average diameter when the compound is circular, but it refers to an average of long diameters which is an average long diameter when it is oval or amorphous.

The binder may be a binder strong for the oxidation, for example, may be any binder having an oxidation resistance in a positive electrode potential of less than or equal to about 4.45 V (vs. Li⁺).

Such a binder may include, for example, a styrene-butadiene rubber, an acrylate-based compound, an imide-based compound, a polyvinylidene fluoride-based compound, a polyvinylpyrrolidone-based compound, a nitrile-based compound, an acetate-based compound, a cellulose-based compound, a cyano-based compound, and the like. Specific examples of the acrylate-based compound may include polyacrylic acid (PAA), polymethylmethacrylate, polyisobutylmethacrylate, polyethylacrylate, polybutylacrylate, poly(2-ethylhexyl acrylate), or a combination thereof.

Specific examples of the imide-based compound may include polyimide, polyamide imide, or a combination thereof. In addition, specific examples of the polyvinylidene fluoride-based compound may include polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene and polyvinylidene fluoride-co-ethylenefluoride-hexafluoropropylene (PVdF), polyvinylidene fluoride-trichloroethylene, or a combination thereof, and specific examples of the polyvinylpyrrolidone-based compound may include polyvinylpyrrolidone, or a combination thereof.

In addition, specific examples of the nitrile-based compound may include polyacrylonitrile, an acrylonitrile-styrene-butadiene copolymer, or a combination thereof, specific examples of the acetate-based compound may include polyvinylacetate, ethylene-co-vinyl acetate, cellulose acetate, cellulose acetate butyrate, cellulose acetate propionate, or a combination thereof, specific examples of the cellulose-based compound may include cyanoethyl cellulose, carboxyl methyl cellulose, or a combination thereof, and specific examples of the cyano-based compound may include cyanoethyl sucrose.

The binder having excellent oxidation resistance may be well bonded with the compound represented by Chemical Formula 3 as well as the first and the second positive active material of the positive active material included in the positive active material layer, so it may strongly retain a bonding between the functional layer and the positive active material layer.

When using the binder, water or alcohols may be used as a solvent for the functional layer. When the solvent includes water or alcohols, it has merits of not damaging an electrode.

The functional layer may have a thickness of 1 µm to 13 µm, or 2 µm to 4 µm according to another embodiment. When the thickness of the functional layer is within the range, it may have a merit of further enhancing the safety.

On the other hand, an average thickness of the positive active material layer may be 50 µm to 70 µm, and more specifically, 50 µm to 60 µm or 60 µm to 70 µm. When the thickness of the positive active material layer is within the range, it may increase an energy density according to the thickening, as well, it may have merits of applying the various kinds of batteries according to the aspects of the device to be employed.

In addition, the ratio of the positive active material layer thickness to the functional layer thickness may range from 30 : 1 to 10 : 1. When the ratio of the positive active material layer thickness to the functional layer thickness is within the range, it may provide a coating layer improving the safety as well as minimizing the energy density deterioration. Particularly, when the thickness of the functional layer and the thickness of the positive active material layer are within the ranges, and when a ratio of the thickness of the positive active material layer to the thickness of the functional layer is within the range, it may have merits of enhancing the safety by providing the functional layer with an appropriate thickness according to the thickness of the positive active material layer.

The thickness of the positive active material layer may be a thickness after performing a pressing process during manufacturing a positive electrode.

Next, a mixing ratio of the compound represented by Chemical Formula 3 and the binder may be, for example, a weight ratio of 24 : 1 to 50 : 1, or a weight ratio of 43 :1 to 50 : 1. When the mixing ratio of the compound represented by Chemical Formula 3 and the binder is within the range, it may have merits of providing appropriate ratios for energy density, adherence, dispersion, and the like.

The functional layer may further include a thickener. Such a thickener may include for example at least one of carboxymethyl cellulose, hydroxypropylmethyl cellulose, methyl cellulose, or an alkali metal salt thereof. The alkali metal may be Na, K, or Li. When the functional layer further includes the thickener, an amount of the thickener may be about 0.6 parts by weight to about 2 parts by weight based on 100 parts by weight of the compound of Chemical Formula 3. When the amount of the thickener is within the range, the resistance increase may be minimized, and also the thickening and dispersing properties may be improved.

As in above, the functional layer includes a compound represented by Chemical Formula 3 and a binder, selectively, a thickener, but does not include a conductive material. When the functional layer includes the conductive material, it is unfavorable since the safety is deteriorated, for example, a short is occurred.

Meanwhile, the functional layer may further include polymer particles besides the compound represented by Chemical Formula 3.

The polymer particle may include, for example, polyethylene wax, acryl-based particles having a glass transition temperature (Tg) of less than or equal to 100°C, for example, less than or equal to 50°C, or a combination thereof. The amount of the polymer particles may range from 20 wt% to 70 wt%, specifically, 20 wt% to 60 wt%, more specifically, 30 wt% to 50 wt% based on the total amount of the functional layer. When the amount of the polymer particle satisfies the range, it may further enhance the shut-down function of the rechargeable lithium battery without deteriorating the battery performance.

The polymer particle may have a weight average molecular weight of 300 to 10,000.

In addition, the polymer particle may have an average particle diameter of 100 nm to 5 µm.

The polymer particle may have a weight average molecular weight of 300 to 10,000, specifically, 2,000 to 6,000. In addition, the polymer particle may have a diameter of 100 nm to 5 µm, specifically, 200 nm to 3 µm.

When the weight average molecular weight and the average particle diameter of the polymer particle satisfy the ranges, the pores are prevented in the internal part of the second positive active material to block the lithium ion transfer, so as to minimize the resistance. Thus, although the nickel-based lithium composite oxide is employed as a first positive active material, it may significantly improve a stability of a rechargeable lithium battery employing the positive active material according to the present embodiment.

As in above, when the functional layer further includes the polymer particles having the characteristics, it may further enhance the shut down function of a rechargeable lithium battery employing the positive electrode according to the present embodiment, so as to early suppress heating of the rechargeable lithium battery and to further improve the thermal stability.

A rechargeable lithium battery according to an embodiment of the present disclosure may include a positive electrode, a negative electrode, and an electrolyte solution.

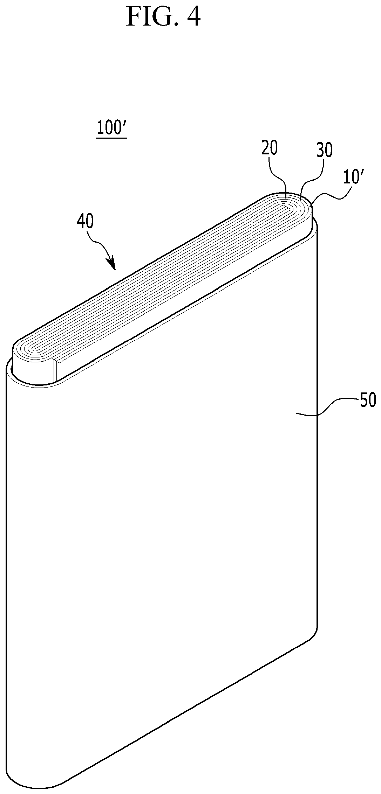

FIG. 4 is a schematic view of a rechargeable lithium battery according to an embodiment.

Referring to FIG. 4, a rechargeable lithium battery 100' according to an embodiment includes an electrode assembly 40 manufactured by winding a separator 30 interposed between a positive electrode 10' and a negative electrode 20, and a case 50 housing the electrode assembly 40. An electrolyte solution (not shown) may be impregnated in the positive electrode 10', the negative electrode 20, and the separator 30.

In the present embodiment, the positive electrode for a rechargeable lithium battery according to the embodiments may be used as the positive electrode. In the present embodiment, the descriptions for the positive electrode are same as in above, so will be omitted.

Next, the negative electrode 20 includes a negative electrode current collector and a negative active material layer positioned on the current collector. The negative active material layer includes a negative active material.

The negative active material may include a material that reversibly intercalates/deintercalates lithium ions, a lithium metal, a lithium metal alloy, a material being capable of doping/dedoping lithium, or transition metal oxide.

The material that reversibly intercalates/deintercalates lithium ions includes a carbon material. The carbon material may be any generally-used carbon-based negative active material in a rechargeable lithium battery. Examples of the carbon-based negative active material may include crystalline carbon, amorphous carbon, or mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may be a silicon-based material, for example, Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof , and not Si), a Si-carbon composite, Sn, SnO₂, Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), a Sn-carbon composite, and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide includes lithium titanium oxide.

In the negative active material layer, the negative active material may be included in an amount of about 95 wt% to about 99 wt% based on the total weight of the negative active material layer.

The negative active material layer includes a negative active material and a binder, and optionally a conductive material.

In the negative active material layer, the negative active material may be included in an amount of about 95 wt% to about 99 wt% based on the total weight of the negative active material layer. In the negative active material layer, a content of the binder may be about 1 wt% to about 5 wt% based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, a polyvinyl alcohol, sodium polyacrylate, a copolymer of propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. The thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, denka black, carbon fiber, and the like; a metal-based material of a metal powder or a metal fiber including copper, nickel, aluminium, silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

On the other hand, the electrode assembly, as shown in FIG. 4, may have a structure obtained by interposing a separator 30 between band-shaped positive electrode 10 and negative electrode 20, spirally winding them, and compressing it into flat. In addition, even though not shown, a plurality of quadrangular sheet-shaped positive and negative electrodes may be alternately stacked with a plurality of separator therebetween.

An electrolyte solution may be impregnated in the positive electrode 10, the negative electrode 20, and the separator 30.

The separator 30 may be any generally-used separator in a lithium battery which can separate a positive electrode 10 and a negative electrode 20 and provide a transporting passage for lithium ions. In other words, it may have low resistance to ion transport and excellent impregnation for an electrolyte solution. The separator 30 may be, for example, selected from a glass fiber, polyester, polyethylene, polypropylene, polytetrafluoroethylene, or a combination thereof. It may have a form of a non-woven fabric or a woven fabric. For example, in a rechargeable lithium battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

The electrolyte solution includes a non-aqueous organic solvent and a lithium salt.

The non-aqueous organic solvent serves as a medium for transmitting ions taking part in the electrochemical reaction of a rechargeable lithium battery.

The non-aqueous organic solvent may include a carbonate-based, ester-based, ether-based, ketone-based, alcohol-based, or aprotic solvent. The carbonate based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. The ether based solvent may include dibutyl ether, tetraglyme, diglyme, dimethoxyethane, 2-methyltetrahydrofuran, tetrahydrofuran, and the like, and the ketone based solvent may include cyclohexanone, and the like. The alcohol based solvent may include ethanol, isopropyl alcohol, and the like, and the aprotic solvent may include nitriles such as R-CN (R is a C2 to C20 linear, branched, or cyclic hydrocarbon group, a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture. When the organic solvent is used in a mixture, the mixture ratio may be controlled in accordance with a desirable battery performance.

The carbonate-based solvent may include a mixture of a cyclic carbonate and a linear (chain) carbonate. When the cyclic carbonate and linear carbonate are mixed together in a volume ratio of about 1:1 to about 1:9, an electrolyte performance may be improved.

The non-aqueous organic solvent of this disclosure may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 4.

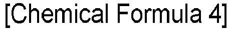

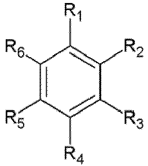

In Chemical Formula 4, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include vinylene carbonate or an ethylene carbonate-based compound of Chemical Formula 5 in order to improve cycle life of a battery.

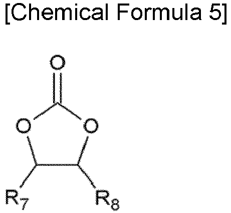

In Chemical Formula 5, R₇ and R₈ are the same or different and selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and fluorinated C1 to C5 alkyl group, and R₇ and R₈ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate, and the like. The amount of the additive for improving cycle life may be used within an appropriate range.

The lithium salt is dissolved in an organic solvent, supplies a battery with lithium ions, basically operates the rechargeable lithium battery, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) wherein, x and y are natural numbers, and for example, an integer of 1 to 20, LiCl, Lil, and LiB(C₂O₄)₂ (lithium bisoxalate borate; LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity. The separator 30 disposed between the positive electrode 10 and the negative electrode 20 may be a polymer film. The separator may include for example, include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

Meanwhile, the rechargeable lithium battery according to an embodiment may be included in a device. Such a device may be for example, one of a mobile phone, a tablet computer, a laptop computer, a power tool, a wearable electronic device, an electric vehicle, a hybrid electric vehicle, a plug-in hybrid electric vehicle, and a power storage device. In this way, the device to which the rechargeable lithium battery is applied is well known in a related art and thus will not be specifically illustrated in the present specification.

Hereinafter, the disclosure will be specifically examined through Examples.

### Example 1 (not part of the claimed invention)

### (1) Manufacture of Positive Electrode

97.4 wt% of a mixture in which a first positive active material and a second positive active material of a LiFePO₄ composition having an average particle diameter of 500 nm were mixed at a weight ratio of 9:1, 1.3 wt% of denka black, and 1.3 wt% of polyvinylidene fluoride were mixed in a N-methyl pyrrolidone solvent to provide a positive active material slurry.

In this case, the first positive active material was a mixture in which a large-sized positive active material of a LiNi_{0.6}Co_{0.2}Mn_{0.2}O₂ composition having an having average particle diameter of 12 µm and a small-sized positive active material of a LiNi_{0.6}Co_{0.2}Mn_{0.2}O₂ composition having an average particle diameter of 3 µm were mixed at a weight ratio of 7:3.

Next, the positive active material slurry was coated on an aluminum foil current collector and dried. Subsequently, the dried product was pressed to provide a positive active material layer having a thickness of 60 µm based on the cross-section thereof excepting the current collector to provide a positive electrode. (2) Manufacture of Negative Electrode and Rechargeable Lithium Battery Cell 98 wt% of graphite, 0.8 wt% of carboxymethyl cellulose, and 1.2 wt% of styrene-butadiene rubber were mixed in pure water to provide a negative active material slurry. The negative active material slurry was coated on a Cu foil and dried and pressed to provide a negative electrode.

Using the positive electrode, the negative electrode, and an electrolyte, a rechargeable lithium battery was manufactured according to the generally used method. The electrolyte was prepared by dissolving 1.0M LiPF₆ in a mixed solvent of ethylene carbonate and dimethyl carbonate (50 : 50 volume ratio).

### Example 2

96 wt% of LiFePO₄ having an average particle diameter of 400 nm, 2 wt% of a carboxymethyl cellulose thickener, and 2 wt% of an acrylate-based compound binder were mixed in a water solvent to provide a slurry for a functional layer.

The functional layer slurry was coated on the positive active material layer obtained from Example 1 and dried to provide a functional layer having a thickness of 3.5 µm.Thereby, it obtained a positive electrode having a structure in which the current collector, the positive active material layer, and the functional layer were sequentially stacked.

Next, a negative electrode and a rechargeable lithium battery cell were manufactured in accordance with the same procedure as in Example 1.

### Example 3

A positive electrode was obtained in accordance with the same procedure as in Example 2, except that the functional layer slurry was prepared by mixing 48 wt% of LiFePO₄ having an average particle diameter of 400 nm, 2 wt% of carboxymethyl cellulose thickener, 48 wt% of PE wax (Mitsui chemical, W401: weight average molecular weight 1000-5000) having a particle diameter of 1 µm, and 2 wt% of an acrylate-based compound binder in a water solvent.

### Comparative Example 1

97.4 wt% of a positive active material, 1.3 wt% of denka black, and 1.3 wt% of polyvinylidene fluoride were mixed in an N-methyl pyrrolidone solvent to provide a positive active material slurry.

In this case, the positive active material was prepared by mixing a large-sized positive active material of a LiNi_{0.6}Co_{0.2}Mn_{0.2}O₂ composition having an average particle diameter of 12 µm and a small-sized positive active material of a LiNi_{0.6}Co_{0.2}Mn_{0.2}O₂ composition having an average particle diameter of 3 µm at a weight ratio of 7:3.

Next, the positive active material slurry was coated on an aluminum foil current collector and dried. Subsequently, the dried product was pressed to provide a positive active material layer having a thickness of 60 µm based on the cross-section thereof excepting the current collector to provide a positive electrode.

Then a negative electrode and a rechargeable lithium battery cell were manufactured in accordance with the same procedure as in Example 1.

### Comparative Example 2

A positive electrode, a negative electrode, and a rechargeable lithium battery cell were manufactured in accordance with the same procedure as in Example 1, except that the second positive active material having an average particle diameter of 1 µm was used during preparing the positive active material slurry.

### Comparative Example 3

A positive electrode, a negative electrode, and a rechargeable lithium battery cell were manufactured in accordance with the same procedure as in Example 1, except that the second positive active material having an average particle diameter of 1 µm was used, and the first positive active material and the second positive active material were mixed at a weight ratio of 89:11 to provide the positive active material slurry.

### Experimental Example 1: Evaluation of Specific Capacity

The rechargeable lithium battery cells obtained from Example 1 and Comparative Examples 1 to 3 were performed with one cycle at room temperature (25°C) in a current of 0.2C to measure a specific capacity, and the results are shown in Table 1.

In this case, the conditions were that the charge upper limit voltage at a room temperature (25°C) is 2V, and the discharge cut-off voltage is 4.3V.

Referring to Table 1, it is confirmed that the rechargeable lithium battery cell according to Example 1 rarely showed the capacity deterioration on the basis that the rechargeable lithium battery cell according to Comparative Example 1 including no secondary positive active material showed a specific capacity of 184 mAh/g.

However, it is confirmed that the rechargeable lithium battery cells according to Comparative Examples 2 to 3 showed a capacity deterioration of greater than or equal to at least 3%.

### Experimental Example 2: Measurement of Thermal Stability

In order to verify a thermal stability, a differential scanning calorimeter (DSC) evaluation was performed. The DSC evaluation was carried out using a Q2000 equipment manufactured by TA Instruments by monitoring a calorie change.

The rechargeable lithium battery cells obtained from Examples 1 to 2 and Comparative Example 1 were charged in 100% at 0.1C until 4.3V, and then the battery cell was disassembled to separate a positive electrode. The separated electrode was washed with DMC (dimethylcarbonate) and then dried for 10 hours or longer, and then only positive active material was peeled off from the current collector, and then an electrolyte solution was added to the peeled off active material (mass ratio of positive active material and electrolyte solution = 1:2) to perform a DSC evaluation. A scan rate on the measurement is 5°C/min.

**Table 1**

| | Second positive active material average particle diameter (µm)/amount (wt%) | Specific capacity (mAh/g) | DSC, heating value (J/g) |
|---|---|---|---|
| Example 1 | 0.5/10 | 183.8 | 790.95 |
| Example 2 | 0.5/10 | 183.6 | 755.89 |
| Comparative Example 1 | - | 184 | 1097.6 |
| Comparative Example 2 | 1.0/10 | 179.2 | 843.7 |
| Comparative Example 3 | 1.0/11 | 177.4 | 752.4 |

### Referring to Table 1 (Example 1 does not form part of the claimed invention),

it is confirmed that the rechargeable lithium battery cells according to Examples 1, 2 including the second positive material having the ranged average particle diameter in the positive active material layer all showed excellent capacity and stability. On the other hand, it is confirmed that the rechargeable lithium battery cell according to Comparative Example 1 including no second positive active material in the positive active material layer showed significantly deteriorated stability.

In addition, it is confirmed that the capacity was significantly deteriorated in the rechargeable lithium battery cells according to Comparative Examples 2 and 3 including the second positive active material with an average particle diameter which is out of the range according to the present embodiment.

Resultantly, summarizing the results of Experimental Examples 1 and 2, it is understood that the rechargeable lithium battery may have excellent stability and also have excellent capacity when the active material layer includes the second positive active material satisfying the conditions according to the present embodiments.

### Experimental Example 3: Accelerating Rate Calorimetry (ARC) Analysis

The rechargeable lithium battery cells obtained from Examples 1 to 3 and Comparative Example 1 were performed with an accelerating rate calorimetry (ARC) analysis according to the following method, and the results are shown in Table 2.

The thermal stability was evaluated under the ARC evaluation conditions of charging the rechargeable lithium battery cells at 25°C in 0.5C and pausing the same for 12 hours, and then increasing the temperature until 400°C at an increasing rate of 5°C/min to measure the battery temperature change.

**Table 2**

| | Self exothermic temperature (°C) | |
|---|---|---|
| | 1°C/min exothermic onset temperature | 10°C/min thermal runaway onset temperature |
| Example 1 (10% blending) | 157.6 | 200.7 |
| Example 2 (10% blending + LFP coating) | 153.2 | 203.0 |
| Example 3(PE wax + LFP mixing coating) | 154.5 | 190.0 |
| Comparative Example 1 (NCM622 alone) | 143.1 | 185.4 |

Referring to Table 2, it is confirmed that Examples 1 to 3 showed both a higher exothermic onset temperature and a higher thermal runaway onset temperature than Comparative Example 1.

Thus, as the exothermic onset temperature is high in the cases of Examples 1 to 3, it is confirmed that the rechargeable lithium battery cells according to Examples 1 to 3 showed an excellent safety, compared to Comparative Example 1. Furthermore, as Examples 1 to 3 showed a high thermal runaway onset temperature as well, it is confirmed that the exothermic reaction was smoothly occurred enough to provide a rechargeable lithium battery having excellent stability.

### Experimental Example 4 - Room Temperature Cycle-life Characteristics

The rechargeable lithium battery cells according to Examples 1 to 2 and Comparative Example 1 were charged and discharged for 100 cycles under the conditions of charging the same at a room temperature (25°C) in a constant current-constant voltage and under the cut-off conditions of 0.5C, 4.3V and 0.05C and then allowed to stand for 10 minutes and discharging the same at a constant current 0.5C and the cut-off condition of 2.8V and then allowed to stand for 10 minutes, and the discharge capacity was measured. A capacity retention at the 100th cycle to the first discharge capacity was obtained, and the results are shown in Table 3.

**Table 3**

| | 100 cycle (room temperature of 25°C, %) |
|---|---|
| Example 1 (10% blending) | 97.7 |
| Example 2 (10% blending + LFP coating) | 99.8 |
| Comparative Example 1 (NCM622 single) | 97.1 |

### Experimental Example 5 - High Temperature Cycle-life Characteristics

The rechargeable lithium battery cells obtained from Examples 1 to 2 and Comparative Example 1 were charged and discharged for 200 cycles under the conditions of charging the same at a high temperature (45°C) at a constant current-constant voltage under the cut-off conditions of 0.75C, 4.3V and 0.05C and then allowed to stand for 10 minutes and discharging the same at a constant current of 0.5C and under the cut-off condition of 2.8V and then allowed to stand for 10 minutes, and a discharge capacity was measured. A capacity retention at the 200th cycle with respect to the first discharge capacity was obtained, and the results are shown in Table 4.

**Table 4**

| | 100 cycle (%) |
|---|---|
| Example 1 (10% blending) | 99.1 |
| Example 2 (10% blending + LFP coating) | 99.7 |
| Comparative Example 1 (NCM622 alone) | 95.4 |

### Experimental Example 6 - Safety Evaluation

Each 10 rechargeable lithium battery cells according to Examples 1 to 3 and Comparative Example 1 were manufactured and performed with a penetration test.

The penetration test was performed by charging the rechargeable lithium battery cells until 4.25 V at 0.5C for 3 hours, and then after 10 minutes, the central part of the battery cell was penetrated using a pin having a diameter of 3 mm at a speed of 80 Mm/sec. The results are shown in Table 5.

**Table 5**

| | Non-ignition | Smoke | Ignition |
|---|---|---|---|
| Example 1 | 10 | - | - |
| Example 2 | 10 | - | - |
| Example 3 | 10 | | |
| Comparative Example 1 | - | - | 10 |

Referring to Table 5, all of the 10 rechargeable lithium battery cells obtained from Examples 1 to 3 were all not fired in the penetration test, but the 10 rechargeable lithium battery cells obtained from Comparative Example 1 were all fired and exploded.

Accordingly, it is confirmed that the rechargeable lithium battery cell employing the positive active material according to the present embodiment showed excellent safety.

### <Description of symbols>

100: rechargeable lithium battery
10: positive electrode
20: negative electrode
30: separator

## Claims

1. A positive electrode (10) for a rechargeable lithium battery (100), comprising
a current collector;
a positive active material layer disposed on at least one surface of the current collector,
wherein the positive active material layer comprises a positive active material comprising a first positive active material and a second positive active material, wherein
the first positive active material comprises at least one nickel-based lithium composite oxide, and
the second positive active material is represented by Chemical Formula 2 and has an average particle diameter of 300 nm to 600 nm measured according to the method defined in the description:
[Chemical Formula 2] Liₐ₁Fe₁₋ₓ₁M1ₓ₁PO₄ ,
wherein
0.90 ≤ a1 ≤ 1.8, 0 ≤ x1 ≤ 0.7, and M1 is Mg, Co, Ni, or a combination thereof; and
a functional layer disposed on the positive active material layer, wherein
the functional layer further comprises the compound represented by Chemical Formula 3, a binder and does not include a conductive material
[Chemical Formula 3] Liₐ₃Fe₁₋ₓ₃M3ₓ₃PO₄
wherein
0.90 ≤ a3 ≤ 1.8, 0 ≤ x3 ≤ 0.7, and
M3 is Mg, Co, Ni, or a combination thereof.

2. The positive electrode of claim 1, wherein an average particle diameter of the compound represented by Chemical Formula 3 ranges from 0.2µm to 11µm, wherein the particle size analysis is performed according to the method defined in the description.

3. The positive electrode of claim 1, wherein the binder comprises at least one of a styrene-butadiene rubber, an acrylate-based compound, an imide-based compound, a polyvinylidene fluoride-based compound, a polyvinylpyrrolidone-based compound, a nitrile-based compound, an acetate-based compound, a cellulose-based compound, and a cyano-based compound.

4. The positive electrode of claim 1, wherein a thickness ratio of the positive active material layer relative to the functional layer ranges from 30 : 1 to 10 : 1.

5. The positive electrode of claim 1, wherein
the functional layer further comprises a polymer particle, and
an amount of the polymer particle ranges from 20 wt% to 70 wt% based on a total amount of the functional layer.

6. A rechargeable lithium battery (100), comprising
the positive electrode (10) of claim 1;
a negative electrode (20); and
an electrolyte solution.

## Patentansprüche

1. Eine positive Elektrode (10) für eine wiederaufladbare Lithiumbatterie (100), aufweisend einen Stromkollektor;
eine positive Aktivmaterialschicht, die auf zumindest einer Oberfläche des Stromkollektors angeordnet ist, wobei die positive Aktivmaterialschicht ein positives Aktivmaterial, das ein erstes positives Aktivmaterial und ein zweites positives Aktivmaterial aufweist, aufweist, wobei
das erste positive Aktivmaterial zumindest ein Lithiumverbundoxid auf Nickelbasis aufweist, und
das zweite positive Aktivmaterial durch die chemische Formel 2 dargestellt ist und einen mittleren Partikeldurchmesser von 300 nm bis 600 nm, der gemäß des in der Beschreibung definierten Verfahrens gemessen wird, aufweist:
[Chemische Formel 2] Liₐ₁Fe₁₋ₓ₁M1ₓ₁PO4,
wobei
0,90 ≤ a1 ≤ 1,8; 0 ≤ x1 ≤ 0,7; und M1 Mg, Co, Ni oder eine Kombination derselben ist; und
eine Funktionsschicht auf der positiven Aktivmaterialschicht angeordnet ist, wobei
die Funktionsschicht ferner die durch die chemische Formel 3 dargestellte Verbindung und ein Bindemittel aufweist und kein leitendes Material aufweist
[Chemische Formel 3] Lia₃Fe₁₋ₓ₃M3ₓ₃PO₄,
wobei
0,90 ≤ a3 ≤ 1,8; 0 ≤ x3 ≤ 0,7, und
M3 Mg, Co, Ni oder eine Kombination derselben ist.

2. Die positive Elektrode nach Anspruch 1, wobei ein mittlerer Partikeldurchmesser der durch die chemische Formel 3 dargestellten Verbindung im Bereich von 0,2 µm bis 1 µm liegt, wobei die Partikelgrößenanalyse gemäß dem in der Beschreibung definierten Verfahren durchgeführt wird.

3. Die positive Elektrode nach Anspruch 1, wobei das Bindemittel zumindest eines von Styrol-Butadien-Kautschuk, einer Verbindung auf Acrylatbasis, einer Verbindung auf Imidbasis, einer Verbindung auf Polyvinylidenfluoridbasis, einer Verbindung auf Polyvinylpyrrolidonbasis, einer Verbindung auf Nitrilbasis, einer Verbindung auf Acetatbasis, einer Verbindung auf Cellulosebasis und einer Verbindung auf Cyanbasis aufweist.

4. Die positive Elektrode nach Anspruch 1, wobei ein Dickenverhältnis der positiven Aktivmaterialschicht bezüglich der Funktionsschicht im Bereich von 30 : 1 bis 10 : 1 liegt.

5. Die positive Elektrode nach Anspruch 1, wobei
die Funktionsschicht ferner einen Polymerpartikel aufweist, und
eine Menge des Polymerpartikels im Bereich von 20 Gew.-% bis 70 Gew.-%, bezogen auf eine Gesamtmenge der Funktionsschicht, liegt.

6. Eine wiederaufladbare Lithiumbatterie (100), aufweisend
die positive Elektrode (10) nach Anspruch 1;
eine negative Elektrode (20); und
eine Elektrolytlösung.

## Revendications

1. Electrode positive (10) pour une batterie rechargeable au lithium (100), comprenant
un collecteur de courant ;
une couche de matériau actif positif disposée sur au moins une surface du collecteur de courant,
où la couche de matériau actif positif comprend un matériau actif positif comprenant un premier matériau actif positif et un deuxième matériau actif positif, où
le premier matériau actif positif comprend au moins un oxyde composite de lithium à base de nickel, et
le deuxième matériau actif positif est représenté par la formule chimique 2 et a une granulométrie moyenne de 300 nm à 600 nm, mesurée conformément au procédé défini dans la description ;
[formule chimique 2] Liₐ₁Fe₁₋ₓ₁M1ₓ₁PO₄,
dans laquelle
0,90 ≤ a1 ≤ 1,8, 0 ≤ x1 ≤ 0,7, et M1 est Mg, Co, Ni, ou une de leurs combinaisons ; et
une couche fonctionnelle disposée sur la couche de matériau actif positif, où
la couche fonctionnelle comprend en outre le composé représenté par la formule chimique 3, un liant, et ne contient pas de matériau conducteur ;
[formule chimique 3] Liₐ₃Fe₁₋ₓ₃M3ₓ₃PO₄,
dans laquelle
0,90 ≤ a3 ≤ 1,8, 0 ≤ x3 ≤ 0,7, et
M3 est Mg, Co, Ni, ou une de leurs combinaisons.

2. Electrode positive selon la revendication 1, dans laquelle la granulométrie moyenne du composé représenté par la formule chimique 3 est située dans la plage allant de 0,2 µm à 1 µm, où l'analyse de granulométrie est effectuée conformément au procédé défini dans la description.

3. Electrode positive selon la revendication 1, dans laquelle le liant comprend au moins l'un parmi un caoutchouc de styrène-butadiène, un composé à base d'acrylate, un composé à base d'imide, un composé à base de poly(fluorure de vinylidène), un composé à base de polyvinylpyrrolidone, un composé à base de nitrile, un composé à base d'acétate, un composé à base de cellulose, et un composé à base de cyano.

4. Electrode positive selon la revendication 1, dans laquelle le rapport d'épaisseur de la couche de matériau actif positif par rapport à la couche fonctionnelle est situé dans la plage allant de 30:1 à 10:1.

5. Electrode positive selon la revendication 1, dans laquelle
la couche fonctionnelle comprend en outre une particule de polymère, et
la quantité de la particule de polymère est située dans la plage allant de 20 % en poids à 70 % en poids par rapport à la quantité totale de la couche fonctionnelle.

6. Batterie rechargeable au lithium (100) comprenant
l'électrode positive (10) de la revendication 1 ;
une électrode négative (20) ; et
une solution d'électrolyte.
